(19) Europäisches Patentamt
European Patent Office
Office européen des brevets

(11) Veröffentlichungsnummer: **0 538 773 B1**

# (12) EUROPÄISCHE PATENTSCHRIFT

(45) Veröffentlichungstag der Patentschrift: **24.05.95**

(51) Int. Cl.[6]: **C09K 19/38**, C08F 220/36, C08F 220/30

(21) Anmeldenummer: **92117882.8**

(22) Anmeldetag: **20.10.92**

## (54) Flüssigkristalline Farbstoffcopolymere.

(30) Priorität: **24.10.91 DE 4135080**

(43) Veröffentlichungstag der Anmeldung:
**28.04.93 Patentblatt 93/17**

(45) Bekanntmachung des Hinweises auf die Patenterteilung:
**24.05.95 Patentblatt 95/21**

(84) Benannte Vertragsstaaten:
**AT BE CH DE DK ES FR GB IT LI NL SE**

(56) Entgegenhaltungen:
**EP-A- 0 090 282**
**EP-A- 0 293 870**
**EP-A- 0 410 205**

**MAKROMOLEKULARE CHEMIE, Bd. 187, Nr. 6, 1986, BASEL CH Seiten 1407 - 1414 K.P.KRISHNAT ET AL 'synthesis of liquid crystalline polyacrylates and their use incapalary gas chromatography'**

**DATABASE WPIL Week 8637, Derwent Publications Ltd., London, GB; AN 86-242376**

(73) Patentinhaber: **RÖHM GMBH**
**Kirschenallee**
**D-64293 Darmstadt (DE)**

(72) Erfinder: **May, Michael, Dr.**
**Dreustrasse 41 D**
**W-6103 Griesheim (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 538 773 B1

## Beschreibung

Gegenstand der Erfindung

Die Erfindung betrifft verbesserte flüssigkristalline Farbstoffcopolymere, wobei die Verbesserung der Orientierungseigenschaften auf lateraler Asymmetrie der Farbstoff-Monomeren beruht.

Stand der Technik

Flüssigkristalline Farbstoffpolymere sind schon seit längerer Zeit bearbeitet worden (vgl. DE-A 30 27 571, H. Ringsdorf et al. in L.L. Chapoy Recent Advances in Liquid Crystalline Polymers, pg. 253 Elsevier 1985, um nur einige herauszugreifen). Beispielsweise werden farbige diskotische Polymere in der DE-A 32 11 400 beschrieben. Polymere, die über einen Spacer mindestens eine mesogene Gruppe und mindestens einen Rest eines pleochroitischen Farbstoffs an die Polymerkette gebunden enthalten, werden z.B. in der EP-A 0 090 282 vorgestellt. Weitere flüssigkristalline Farbstoffpolymere können der US-A 4 387 745, GB-A 2 193 338 und DE-A 38 25 066 entnommen werden. Besonderes Interesse haben flüssigkristalline Polymere (L.C. Polymere mit copolymerisierten oder zugemischten Farbstoffen) im Zusammenhang mit optischen Datenträgern gewonnen. In der DE-A 38 37 936 werden lateral substituierte mesogene Seitenkettenpolymere unter anderem als optische Bauelemente für optische Speicher beschrieben. Bei den zitierten Systemen handelt es sich um Homo- und Copolymere aus lateral Alkyl-substituierten Mesogenen, die mit wachsender Größe des lateralen Substituenten zunehmend stabilere nematische Phasen bei abnehmenden Phasenübergangstemperaturen besitzen. Bei den beschriebenen, erfindungsgemäßen Systemen handelt es sich jedoch nicht um Farbstoffe. Farbstoffhaltige Copolymere können gemäß DE-A 32 11 400 durch Copolymerisation der beschriebenen Systeme mit nicht näher spezifizierten, Farbstoffreste tragenden Comonomeren hergestellt werden. In JP 61, 171 463 werden andererseits Acrylsäurederivate beschrieben, die in der Seitenkette Mesogene aus Azofarbstoffen mit einem lateralen Methylsubstituenten besitzen. Das Phasenverhalten der Mono- und Polymeren wird kurz beschrieben und eine Anwendung als stationäres Material für die Gaschromatographie vorgeschlagen. Weitere physikalische Eigenschaften werden nicht beschrieben.

Die Verwendung flüssigkristalliner Farbstoffpolymere für die reversible, optische Datenspeicherung erfordert neben hoher Empfindlichkeit des Farbstoffes, schnellen Einschreib- und Löschzeiten und guter Langzeitstabilität auch eine einheitliche makroskopische Orientierung der Farbstoffmoleküle in dem Speichermedium.

Aufgabe und Lösung

Da die bisher überwiegend gebräuchlichen Azo-Farbstoffe in der Regel entweder eine smektische Phase besitzen oder nicht mesogen sind, entstehen bei der Copolymerisation von solchen Farbstoffen mit LC-Monomeren immer Systeme, die bei höheren Farstoffkonzentrationen und bei tiefen Temperaturen entweder smektisches Verhalten zeigen, oder eine stark destabilisierte LC-Phase aufweisen. Dies schränkt die nutzbaren Farbstoffkonzentrationen im allgemeinen bereits stark ein. Da die smektische Phase in der Regel die Tieftemperaturphase in einem breiten Temperaturintervall mit höherer Viskosität darstellt, muß deshalb die Vororientierung der Polymerproben in der niedriger viskosen nematischen Phase in einem meist schmalen Temperaturintervall bei höheren Temperaturen erfolgen. Dies bewirkt primär eine höhere thermische Belastung des Polymeren, und führt meist zu einer deutlich schlechteren makroskopischen Orientierung, da beim Abkühlen der Probe in den Glaszustand der smektische Bereich durchlaufen wird. Je breiter der Temperaturbereich dieser Phase ist, desto stärker verringern dabei Umorientierungsphänomene in der Probe die bereits erreichte makroskopische Orientierung.

Es bestand daher die Aufgabe, die beschriebenen Nachteile zu vermeiden und Farbstoffe mit ausreichend stabilen nematischen LC-Phasen zur Verfügung zu stellen. Dabei wurde von der Vorstellung ausgegangen, daß flüssigkristalline Systeme, die oberhalb des Glaszustands nur eine nematische Phase besitzen, die geschilderten Probleme nicht aufkommen lassen. Die vorliegende Erfindung betrifft daher flüssigkristalline Polymere die ausschließlich nematische LC-Phasen aufweisen.

Die Erfindung betrifft somit flüssigkristalline Polymere (LC-Polymere) die ausschließlich nematische flüssigkristalline Phasen bilden die durch Polymerisation bzw. Copolymerisation von mindestens dreikernigen flüssigkristallinen Azofarbstoff-Monomeren M mit lateralen Substituenten in bevorzugten Stellungen des Moleküls hergestellt worden sind.

Die erfindungsgemäßen flüssigkristallinen Farbstoff-Polymeren bzw. Copolymeren NE-P besitzen aufgrund ihrer niedrigeren Viskosität der nematischen gegenüber der smektischen LC-Phase eine deutlich verbesserte makroskopische Orientierbarkeit auf entsprechend vorbehandelten, oberflächenbeschichteten Glasplatten. Dies trifft insbesondere für Polymere NE-P zu, die im Vergleich zu den Monomeren M bekanntermaßen eine nochmals deutlich höhere Viskosität besitzen.
Das Prinzip der lateralen Substitution wurde erstmals von Weissflog und Demus auf dreikernige niedermolekulare Flüssigkristalle angewendet, wobei monotrop nematische Systeme entstanden.
Auf LC-Polymere übertragen wurde dies Prinzip dann von Hessel und Finkelmann, wobei die nematischen Phasen hier Enantiotropie und somit einen Stabilisierungseffekt zeigen. Bei den zitierten Systemen handelt es sich jedoch nicht um Farbstoffe.
Bei der Entwicklung der Polymeren NE-P konnte erfolgreich von dem Konzept Gebrauch gemacht werden, daß das gewünschte Phasenverhalten dann herbeigeführt werden kann, wenn die molekulare Symmetrie des Mesogens dergestalt gestört wird, daß die Ausbildung von smektischen Phasen zwar unterbunden wird, das Molekül aber dennoch genügend mesogenen Charakter besitzt, um nematische Phasen auszubilden, wobei dieses Konzept jedoch nicht limitierend auf Umfang und Ausgestaltung der vorliegenden Erfindung wirken soll.
Als geeignete "Störstellen" zur Unterdrückung smektischen Phasenverhaltens eigenen sich beispielsweise Alkylsubstituenten insbesondere mit 1 bis 11, speziell mit 1 bis 2 Kohlenstoffatomen, sowie Halogensubsituenten, insbesondere Fluor-, Chlor- oder Brom-Substituenten, speziell Chlorsubstituenten an den dreikernigen Azofarbstoff-Monomeren M gemäß der vorliegenden Erfindung. Als besonders geeignete Positionen solcher "Störstellen" sei die 2- oder 3-Stellung zur Azogruppe am mittleren aromatischen Ring des Mesogens genannt. Ferner bewirkt auch der Einbau einer Naphthyl- oder Anthracenyl-Gruppe als Mittelteil des Mesogens die erwünschte Störung der Symmetrie.

Im Sinne der vorliegenden Erfindung anzuwenden sind demnach insbesondere Azofarbstoff-Monomere M der Formel I

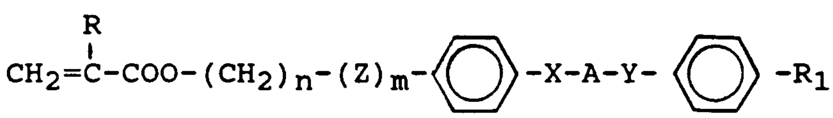

I

worin

- R für Wasserstoff oder Methyl
- $R_1$ für einen Alkylrest mit 1 bis 8 Kohlenstoffatomen oder einen Halogensubstituenten, insbesondere Fluor, Chlor oder Brom oder für einen Alkoxyrest mit 1 bis 8 Kohlenstoffatomen, oder für eine Nitril- oder eine Nitro-Gruppe
- X für einen Rest -COO- oder -N = N- und
- Y für einen Rest -COO- oder -N = N- und n für eine ganze Zahl von 2 bis 11, m für null oder eins,
- Z für Sauerstoff und
- A für einen aromatischen Rest mit lateraler Asymmetrie

steht, mit der Maßgabe, daß X und Y voneinander verschieden oder beides -N = N- Gruppen sein sollen ( = Monomere M-I).

Vorzugsweise steht A für einen Rest

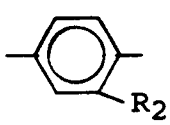

worin $R_2$ einen Alkylrest mit 1 - 11 Kohlenstoffatomen, die mit einer polymerisierbaren Doppelbindung funktionalisiert sein kann insbesondere mit 1 - 2 Kohlenstoffatomen oder Halogen, insbesondere Fluor, Chlor oder Brom bedeutet oder für einen Rest

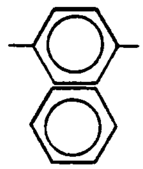

oder

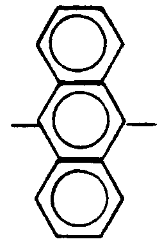

Weiter steht n vorzugsweise für 1.

Die Herstellung der Monomeren M-I kann nach an sich bekannten Verfahren bzw. in Anlehnung an an sich bekannte Verfahren erfolgen. Dabei kann im Falle X = COO - beispielsweise ausgegangen werden von der phenolischen Verbindung der Formel II

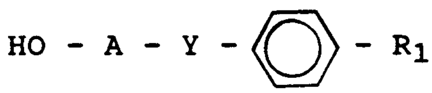

II

worin Y, A und $R_1$ die vorstehend bezeichneten Bedeutungen besitzen, die mit einem Benzoesäurederivat der Formel III

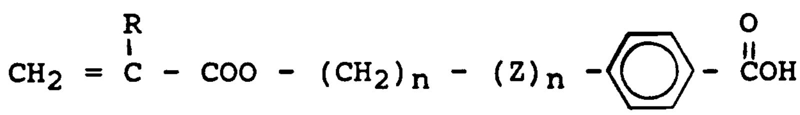

III

worin R, Z, m und n die oben bezeichneten Bedeutungen besitzen zur Verbindung der Formel I kondensiert werden kann, beispielsweise unter Anwendung eines Kondensationsmittels wie Dicyclohexylcarbodiimid (DCC) in einem inerten Medium, z.B. einem Halogen-Kohlenwasserstoff wie beispielsweise Methylenchlorid und in Gegenwart einer inerten Base, z.B. Dimethylaminopyridin.

Die Verbindung der Formel II worin Y für -N=N- steht ist beispielsweise durch Diazotierung von Verbindungen der Formel IV

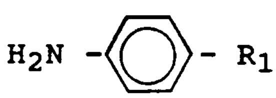

IV

worin $R_1$ die oben angegebene Bedeutung besitzt mit einem Phenol H-A-OH, worin A die oben angegebene Bedeutung besitzt, herstellbar.

Die Herstellung der Verbindungen der Formel III kann z.B. durch Umsetzung eines w-Hydroxyalkylhalogenids der Formel V

$HO - (CH_2)_n - Hal$ V

worin n die oben genannte Bedeutung besitzt und Hal für ein Halogen wie Chlor, Brom oder Iod steht mit 4-Hydroxybenzoesäure nach Art einer Williamson'schen Ethersynthese (vgl. Houben-Weyl, Methoden der Organ. Chemie, 4. Auflage, Bd. 6/3 24, Georg-Thieme-Verlag, 1965) und anschließender azeotroper Veresterung mit (Meth)acrylsäure erfolgen.

Alternativ kann im Falle m = 1 z.B. von den phenolischen Verbindungen der Formel VI

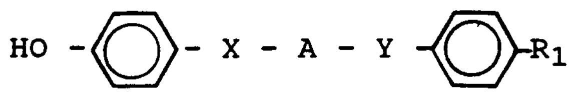

VI

worin X, Y, A und $R_1$ die oben bezeichneten Bedeutungen besitzen, ausgehend mit einem w-Hydroxyalkylhalogenid der Formel V

$HO - (CH_2)_n - Hal$    V

nach Art einer Williamson-Ethersynthese verethert werden zur Verbindung der Formel III

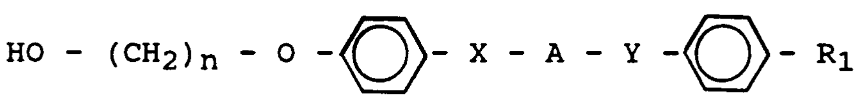

III

worin X, Y, A., $R_1$ und n die oben angegebenen Bedeutungen besitzen, welche mit Acrylsäure bzw. Methacrylsäure bzw. geeigneten Derivaten derselben zu der Verbindung I umgesetzt wird, beispielsweise mittels azeotroper Veresterung.

Neben einem oder mehreren Monomeren M können die erfindungsgemäßen Polymeren NE-P noch in gewissen Anteilen, beispielsweise von 0 bis 99 Gew.-%, vorzugsweise 5 bis 80 Gew.-% Comonomere CO-M beispielsweise vom Typ der von I verschiedenen Ester der (Meth)acrylsäure mit $C_2$-$C_{11}$-Alkylresten als Spacer, zu mesogenen Gruppen enthalten. Derartige mesogene Gruppen lassen sich beispielsweise dem Buch "D.Demus, H. Zaschke, Flüssigkristalle in Tabellen, Band 1 und 2, VEB Deutscher Verlag für Grundstoffindustrie, Leipzig (1974 und 1984) entnehmen. Genannt seien z.B. nematogene Ester der 4-Hydroxybenzoesäure, insbesondere der Biphenyl-Ester der 4-Hydroxybenzoesäure mit zwei Methylengruppen als Spacer.

Die Monomeren M der Formel I lassen sich in an sich bekannter Weise, vorzugsweise radikalisch zu den erfindungsgemäßen flüssigkristallinen Polymeren bzw. Copolymeren NE-P polymerisieren.

Dabei kann die Polymerisation sowohl nach dem Substanzals nach dem Emulsions- oder dem Suspensionsverfahren erfolgen (vgl. H. Rauch-Puntigam, Th. Völker, Acryl- und Methacrylverbindungen, Springer-Verlag, Berlin 1967). Im allgemeinen führt man die radikalische Polymerisation bei Temperaturen oberhalb Raumtemperatur, insbesondere im Bereich von 40 bis 70 Grad C mittels der bekannten Initiatoren wie den Perverbindungen oder den Azoverbindungen in der Regel in Mengen von 0,001 bis 1,0 Gew.-% bezogen auf die Gesamtheit der Monomeren durch. Genannt seien z.B. Dibenzoylperoxid, Dilauroylperoxid, Di-tert.-butylperoxid, Azoisobuttersäuredinitril. (Vgl. H. Rauch-Puntigam, Th. Völker, Acryl- und Methacrylverbindungen, Springer-Verlag Berlin 1967).

Weiter können zur Regelung des Molekulargewichts an sich bekannte Regeler, insbesondere Schwefelregler in den dafür üblichen Mengen, beispielsweise 0,05 bis 2 Gew.-% bezogen auf die Gesamtheit der Monomeren eingesetzt werden. Im allgemeinen liegt das Molekulargewicht Mw im Bereich 10 000 bis 1 000 000, vorzugsweise 20 000 bis 50 000 Dalton. (Bestimmung gemäß H.F. Mark et al., Encyclopedia of Polymer Science and Technology 2nd. Ed. Vol. 10, J. Wiley 1987).

Vorteilhafte Wirkungen

Mit den erfindungsgemäßen Polymeren NE-P stehen nunmehr flüssigkristalline Farbstoffpolymere zur Verfügung, die aufgrund der niedrigen Viskosität ihrer nematischen Phase eine verbesserte makroskopische Orientierung bei tieferen Temperaturen als bisher ermöglichen. Diese Systeme unterliegen außerdem keiner Beschränkung hinsichtlich der verwendeten Farbstoffkonzentrationen.

Vorteilhafte Wirkungen

In Fig. 1 wird die Ausbildung makroskopischer LC-Monodomänen z.B. über Oberflächeneffekte dargestellt. Nach Aufbringen von flüssigkristallinem Polymer auf einen geeignenten Träger zweckmäßig in dünner

Schicht (ca. 1 um) bildet sich in der Regel eine Struktur mit statistischer Verteilung der Vorzugsrichtungen der einzelnen Domänen aus (Zustand A). Die Pfeile repräsentieren hierbei die Direktoren. Zur Verwendung als optischer Datenspeicher für Phasenmodulation mittels linear polarisiertem Licht ist das Voliegen eines Ausgangszustandes mit definierter, einheitlicher Direktor-Orientierung (Zustand B) erforderlich. Diese Orientierung kann u.a. durch geeignet vorbehandelte Oberflächen erzielt werden. Solche Eigenschaften werden in besonders vorteilhafter Weise durch die erfindungsgemäßen Polymeren aufgebaut aus Monomeren der Formel I erreicht, die, wie bereits ausgeführt, notwendigerweise nematisches Verhalten zeigen. Die beschriebene einheitliche Direktor-Orientierung wird dabei durch Tempern unterhalb der Klärtemperatur des Polymers bzw. Copolymers erreicht. Die Messung der Güte der Orientierung erfolgt im Polymerisationsmikroskop durch Messung der Lichtintensitäten parallel zur Vorzugsrichtung (Dunkelstellung) und unter einem Winkel von 45 Grad hierzu (Hell-Stellung). Die numerischen Werte des hieraus resultierenden Orientierungs-Wirkungsgrades bewegen sich dabei zwischen 0 und 100 %.
Als Träger dient beispielsweise ein PI-beschichtetes Glassubstrat.

BEISPIELE

Herstellung der Monomeren M

I-1. 4-(4-(Methacryloyloxyhexamethylenoxy)benzoyloxy)-4'-ethoxy-2-ethyl-azobenzol

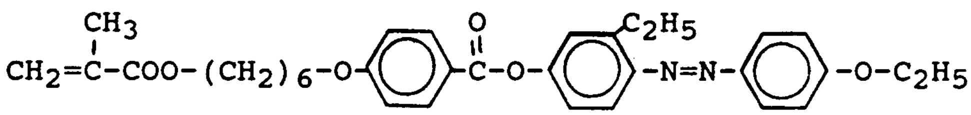

In einem Rundkolben werden 30,6 g (0,1 mol) 4-(4-Methacryloyloxyhexamethylenoxy)-benzoesäure, 24,4 g (0,1 mol) 4-Hydroxy-4'-ethoxy-2-ethyl-azobenzol, 0,6 g (5 mmol) Dimethylaminopyridin und 150 ml Methylenchlorid vorgelegt und gerührt. Zu dieser Suspension wird eine Lösung von 26,8 g (0,13 mol) Dicyclohexylcarbodiimid in 50 ml Methylenchlorid gegeben. Die leicht exotherme Reaktion wird mittels eines Eisbades bei max. 30 Grad C gehalten. Nach ca. einer Stunde wird die Kühlung entfernt und der Ansatz noch ca. 4 Stunden bei Raumtemperatur gerührt. Das Reaktionsgemisch wird mit Trockeneis auf ca. 0 Grad C gekühlt, wobei der entstandene Dicyclohexyl-Harnstoff ausfällt und abgesaugt werden kann. Das Filtrat wird bei Raumtemperatur eingeengt und der Rückstand in 200 ml Methylenchlorid aufgenommen, filtriert und erneut eingeengt. Das Rohprodukt wird aus 70 ml Essigester-Isopropanol-Gemisch (3/5) umkristallisiert. Der erhaltene Feststoff wird abgesaugt, mit Hexan gewaschen und im Vakuum bei Raumtemperatur getrocknet. Die Ausbeute beträgt 38,9 g oder 71,4 % der Theorie.

Herstellung der Ausgangsverbindungen der Formel II

II-1 4'-Ethoxy-2-ethyl-4-hydroxyazobenzol

0,8 mol (109,8 g) p-Phenetidin und 2,1 mol 16 %ige Salzsäure (450 ml) werden in einem Rundkolben vorgelegt. Unter Kühlen der Suspension auf ca. 3 Grad C werden 59,2 g (0,8 mol) $NaNO_2$ gelöst in 320 ml Wasser während 2,5 Stunden zugetropft. Dabei wird die Temperatur zwischen 1 Grad C und 4 Grad C gehalten. Nach beendeter Zugabe wird der Ansatz noch ca. 3 Stunden bei 0 Grad C - 3 Grad C gerührt und über Nacht im Kühlschrank aufbewahrt. Diese Suspension des Diazoniumions tropft man bei ca. 2 Grad C innerhalb von 2 Stunden unter Rühren zu einer Lösung von 0,8 mol (97,7 g) 3-Ethylphenol in 800 ml 2-normaler Natronlauge, die auf ca. 5 Grad C gekühlt wurde. Dabei entsteht eine orange-gelbe Suspension. Man läßt das Reaktionsgemisch auf Raumtemperatur erwärmen und rührt noch ca. 1 Stunde nach. Das Rohprodukt wird anschließend abgesaugt und mit kaltem, destilliertem Wasser gewaschen. Der Filterkuchen wird mit 2 l Ethanol-Wasser-Gemisch (50/50) aufgekocht und filtriert. Man läßt unter Rühren das entstandene 2-Phasen-Gemisch abkühlen. Dabei fällt ein braun-roter Feststoff aus. Dieser wird abgesaugt und neutral gewaschen. Nach Trocknen erhält man das Produkt in einer Ausbeute von 61 % der Theorie.

Herstellung der Monomeren CO-M

I-2 Methacryloyloxy-4-ethyloxy-benzoesäure-4-diphenylester

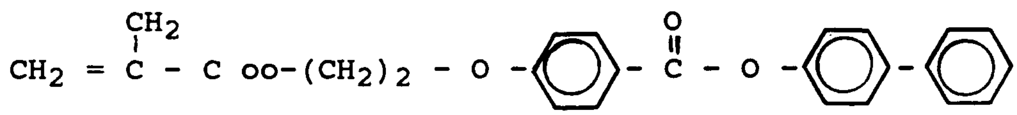

In einem Rundkolben werden 42,55 g 4-Hydroxydiphenyl, 3,66 g Dimethylaminopyridin zusammen mit 30,18 g Triethylamin unter Rühren in 200 ml 1,4-Dioxan gelöst. Dazu werden unter Rühren 67,17 g Methacryloxy-4-ethyloxybenzoylchlorid in 200 ml 1,4-Dioxan gelöst zugetropft. Die Reaktion ist exotherm (Temperaturanstieg bis ca. 49 Grad C). Der Ansatz wird über Nacht bei Raumtemperatur gerührt. Anschließend engt man den Ansatz am Rotationsverdampfer ein und gibt den Rückstand auf 1 l vollentsalztes Wasser. Anschließend wird 4 mal mit je 200 ml Methylenchlroid dest. extrahiert. Die vereinigten organischen Phasen werden am Rotationsverdampfer eingeengt. Der Rückstand wird aus Ethanol umkristallisiert.

Herstellung der Ausgangsverbindung

II-2 Methacryloxy-4-ethyloxy-benzoylchlorid

62,56 g 4-(Methacryloyloxy-ethoxy)-benzoesäure wird in 0,5 g Dimethylformamid (DMF) vorgelegt und dazu läßt man unter Rühren 54,38 ml Thionylchlorid zutropfen. Die Reaktion ist exotherm. Man läßt über Nacht rühren. Es entsteht eine klare, bräunliche Lösung. Der Überschuß an Thionylchlorid wird unter Vakuum abgezogen. Der Rückstand wird einmal mit 20 ml Toluol (destill) digeriert und das Toluol ebenfalls im Vakuum abgezogen. Der Rückstand kann unmittelbar weiterverarbeitet werden.

Die Tabelle 1 gibt bestimmte, mit Erfolg eingesetzte Comonomere M bzw. CO-M an.

*TABELLE 1*

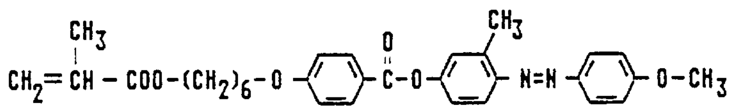
M I

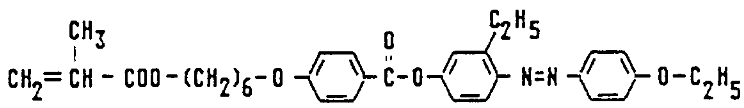
M II

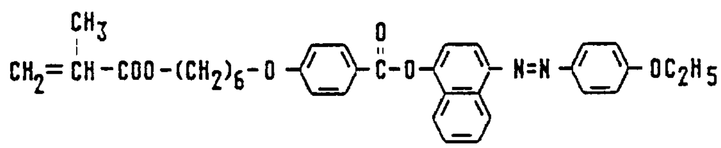
M III

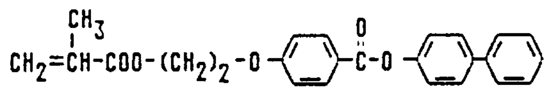
CO-M

Herstellung der Copolymeren

2,09 g (5,2 mmol) des Comonomeren CO-M und 2,91 g des Monomeren M-I werden in 15 ml 1,4-Dioxan gelöst und mit 0,03 g (0,2 mmol) Methyl-3-mercaptopropionat (Regler) versetzt. Die Lösung wird ca. 5 Minuten lang mit Argon gesättigt. Anschließend gibt man 2,2'-Azobis-(isobutyronitril) und 2,2'-Azobis-(2,4-dimethylvaleronitril) in einer Menge von jeweils 1 mol.-% hinzu, verschließt das Polymerisationsgefäß und polymerisiert 24 Stunden bei 70 Grad C. Das entstandene Polymer wird in 400 ml Methanol p.a. ausgefällt, abgesaugt und zur Reinigung weitere 4 mal umgefällt.

Die Tabelle 2 informiert über erfindungsgemäß eingesetzte Polymere und ihre relevanten Eigenschaften. Der Orientierungswirkungsgrad (OWG) wird mit Hilfe des Polarisationsmikroskops bestimmt durch Messung der Lichtintensitäten parallel (Dunkelstellung) und unter einem Winkel von 45 Grad zur Vorzugsrichtung (Hellstellung):

$$\mathrm{OWG} = \frac{I\,(45^{\circ}) - I\,(0^{\circ})}{I\,(45^{\circ})}$$

Tabelle 2

| Eigenschaften der Polymere (Zusammensetzung in Gew.%) | | | | | | |
|---|---|---|---|---|---|---|
| CO-M | M I | M II | M III | $T_g$ | $T_{n,i}$ | OWG |
| 100 | - | - | - | 76° | 173° | - |
| 90 | 10 | - | - | 98° | 183° | 86% |
| 80 | 20 | - | - | 94° | 184° | 89% |
| 30 | 70 | - | - | 52° | 185° | 91% |
| - | 100 | - | - | 54° | 223° | - |
| 90 | - | 10 | - | 104° | 175° | 95% |
| 80 | - | 20 | - | 90° | 171° | 94% |
| 30 | - | 70 | - | 80° | 172° | 90% |
| - | - | 100 | - | 32° | 170° | 94% |
| 90 | - | - | 10 | 99° | 175° | 91% |
| 80 | - | - | 20 | 94° | 176° | 95% |
| 70 | - | - | 30 | 92° | 175° | 95% |
| 60 | - | - | 40 | 92° | 173° | 95% |
| 50 | - | - | 50 | 87° | 173° | 97% |
| 40 | - | - | 60 | 87° | 178° | 99% |
| 30 | - | - | 70 | 74° | 176° | 96% |
| 20 | - | - | 80 | 73° | 165° | 97% |
| 10 | - | - | 90 | 70° | 186° | 97% |
| - | - | - | 100 | 72° | 184° | 85% |
| $T_g$: Glastemperatur<br>$T_{n,i}$: Klärtemperatur (nematisch-isotrop)<br>OWG: Orientierungswirkungsgrad | | | | | | |

**Patentansprüche**

**1.** Flüssigkristalline Polymere, die ausschließlich nematische flüssigkristalline Phasen bilden, enthaltend mindestens dreikernige flüssigkristalline Azofarbstoff-Monomereinheiten M mit lateraler Asymmetrie,

dadurch gekennzeichnet,

daß die flüssigkristallinen Polymeren NE-P Copolymerisate aus Azofarbstoff-Monomeren M der Formel I

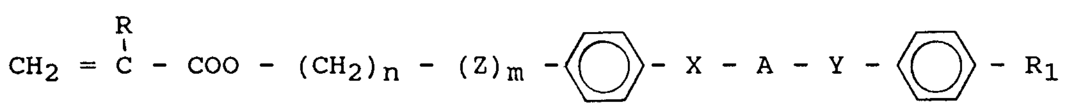

I

worin

- R für Wasserstoff oder Methyl
- $R_1$ für einen Alkylrest mit 1 bis 8 Kohlenstoffatomen, für einen Alkoxyrest mit 1 bis 8 Kohlenstoffatomen oder einen Halogensubstituenten oder für eine Nitril- oder eine Nitro-Gruppe
- X für einen Rest -COO- oder -N=N- und
- Y für einen Rest -COO- oder -N=N- und n für eine ganze Zahl von 2 bis 11, m für null oder eins und
- Z für Sauerstoff
- A für einen aromatischen Rest mit lateraler Asymmetrie

steht, mit der Maßgabe, daß X und Y voneinander verschieden oder beides -N=N-Gruppen sein sollen, und als Comonomere in Anteilen von 5 - 80 Gew.-% bezogen auf die Polymeren NE-P von den Azofarbstoff-Monomeren M verschiedene Ester der Meth(acryl)säure enthaltend über $C_2$-$C_{11}$-Alkylresten als Spacer verbundene mesogene Gruppen

sind.

2. Flüssigkristaliine Polymere NE-P gemäß Anspruch 1, dadurch gekennzeichnet, daß die Polymeren ein durch Zusatz von Schwefelreglern geregeltes Molekulargewicht im Bereich 20 000 bis 50 000 Dalton besitzen.

3. Flüssigkristalline Polmyere NE-P gemäß den Ansprüchen 1 und 2, dadurch gekennzeichnet, daß die Comonomeren nematogene Ester der 4-Hydroxylbenzoesäure sind.

## Claims

1. Liquid crystalline polymers which only form nematic liquid crystalline phases, containing liquid crystalline azodyestuff-monomer units M with at least 3 nuclei and lateral asymmetry, characterised in that the liquid-crystalline polymers are NE-P copolymers consisting of azodyestuff-monomers M of Formula I

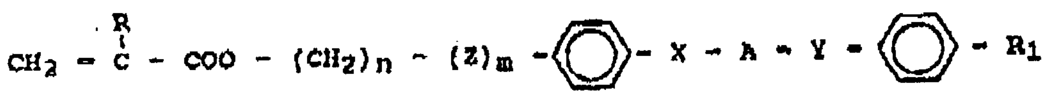

I

wherein

- R denotes hydrogen or methyl
- $R_1$ denotes an alkyl group having 1 to 8 carbon atoms, an alkoxy group having 1 to 8 carbon atoms or a halogen substituent or a nitrile or a nitro group
- X denotes a group -COO- or -N=N- and
- Y denotes a group -COO- or -N=N- and n denotes an integer from 2 to 11, m denotes zero or one and
- Z denotes oxygen
- A denotes an aromatic group with lateral asymmetry,

with the proviso that X and Y must be different from one another or both must be -N=N- groups, and of esters of meth(acrylic)acid as comonomers, in amounts of 5 - 80 wt.% based on the polymers NE-P, the esters being different from the azodyestuff-monomers M and containing mesogenic groups which are connected via $C_2$-$C_{11}$-alkyl groups as spacers.

2. Liquid crystalline polymers NE-P according to claim 1, characterised in that the polymers have a molecular weight within the range of 20,000 to 50,000 Dalton which is regulated by adding sulphur regulators.

3. Liquid crystalline polymers NE-P according to claims 1 and 2, characterised in that the comonomers are nematogenic esters of 4-hydroxylbenzoic acid.

## Revendications

1. Polymères cristallins liquides, qui forment exclusivement des phases cristallines liquides nématiques, contenant des motifs monomères M de colorants azoïques cristallins liquides à au moins trois noyaux et présentant une asymétrie latérale, caractérisés en ce que les polymères NE-P cristallins liquides sont des copolymères de monomères M de colorants azoïques de formule I

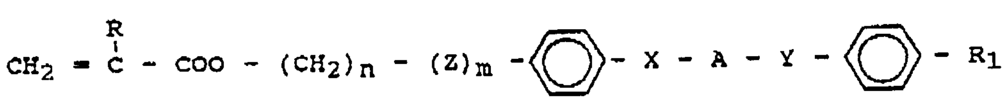

I

dans laquelle

R représente un atome d'hydrogène ou un groupe méthyle,
$R_1$ est mis pour un reste alkyle avant 1 à 8 atomes de carbone, un reste alcoxy ayant 1 à 8 atomes de carbone un substituant halogéné, un groupe nitrile ou un groupe nitro,
X représente un reste -COO- ou -N=N-,
Y un reste -COO- ou -N=N-, n un nombre entier compris entre 2 et 11, m zéro ou un,
Z un atome d'oxygène et
A un reste aromatique présentant une asymétrie latérale,

à condition que X et Y soient différents l'un de l'autre ou représentent tous deux des groupes -N=N-, et d'esters de l'acide (méth)acrylique différents des monomères M de colorants azoïques en tant que comonomères, dans des proportions de 5 à 80% en poids par rapport aux polymères NE-P, contenant des groupes mésogènes reliés par l'intermédiaire de restes alkyle en $C_2$-$C_{11}$ en tant que groupes d'espacement.

**2.** Polymères cristallins liquides NE-P selon la revendication 1, caractérisés en ce que les polymères ont une masse moléculaire réglée par addition de régulateurs au soufre à une valeur comprise entre 20 000 et 50 000 Dalton.

**3.** Polymères cristallins liquides NE-P selon la revendication 1 ou 2, caractérisés en ce que les comonomères sont des esters nématogènes de l'acide 4-hydroxybenzoïque.

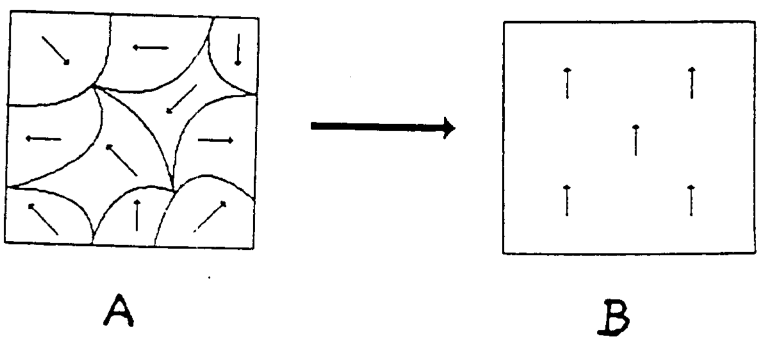


FIG. 1